# EUROPÄISCHE PATENTSCHRIFT

(11) **EP 0 942 200 B1**
(45) Veröffentlichungstag und Bekanntmachung des Hinweises auf die Patenterteilung: **08.01.2003**
(21) Anmeldenummer: 98119134.9
(22) Anmeldetag: 09.10.1998
(51) Int. Cl.: F16H 55/30

(54) **Kettenrad mit Dämpfungsvorrichtung**
Chain wheel with damping means
Pignon de chaîne avec mécanisme d'amortissement

(30) Priorität: 10.03.1998 DE 29804259 U
(43) Veröffentlichungstag der Anmeldung: 15.09.1999
(73) Patentinhaber: JOH. WINKLHOFER & SÖHNE GmbH & Co KG, D-81369 München (DE)
(72) Erfinder: Fink, Thomas Dr., 85221 Dachau (DE); Bachmair, Peter, 81371 München (DE); Gann, Philip, 83727 Schliersee (DE); Schulze, Peter, 85386 Günzenhausen (DE)
(74) Vertreter: Grünecker, Kinkeldey, Stockmair & Schwanhäusser Anwaltssozietät

(56) Entgegenhaltungen:
- DE-A- 19 543 287
- DE-C- 881 590
- US-A- 4 261 214
- PATENT ABSTRACTS OF JAPAN vol. 097, no. 010, 31. Oktober 1997 -& JP 09 152013 A (SUZUKI MOTOR CORP), 10. Juni 1997
- PATENT ABSTRACTS OF JAPAN vol. 007, no. 020 (M-188), 26. Januar 1983 & JP 57 173648 A (YAMAHA HATSUDOKI KK), 26. Oktober 1982

## Beschreibung

Die vorliegende Erfindung betrifft ein Kettenrad gemäß dem Oberbegriff von Anspruch 1.

Derartige Kettenräder werden dort eingesetzt, wo ein geräuscharmer Lauf eines Kettentriebes gefordert wird (z.B. Steuerkettentrieb in Automobilen). Die Dämpfungskränze kommen mit den Laschen einer Kette in Berührung, wobei durch eine elastische Verformung das Auftreffen der Kette auf das Kettenrad abgedämpft wird. Hierzu ist ein Überdeckungskontakt mit den Laschen der Kette erforderlich. Das bedeutet, daß im belasteten Zustand eine teilweise Verdrängung des Materials des Dämpfungsrings durch die Kettenlaschen stattfindet. Unter diesem Begriff verbirgt sich auch die Tatsache, daß die Kette zuerst mit ihren Laschen mit dem Dämpfungskranz in Berührung kommt, bevor die Gelenkhülsen oder darauf angeordnete Laufrollen mit den Zahnflanken in Berührung kommen. Eine entsprechende Geräuschminderung wird hierdurch erreicht. Als Dämpfungskranz wird ein aufvulkanisiertes Elastomer verwendet.

Die gattungsgemäße DE 19543287 A1 befasst sich mit verschiedenen Ausführungsformen eines Kettenrads mit Dämpfkranz für eine Laschenkette. Dort soll eine beim Auslauf der Laschenkette auf das Zahnrad sich langsam verstärkende Federwirkung bereitgestellt werden. Hierzu werden gemäß einer Ausführungsform elastische Stützringe auf die seitlich über den Zahnkranz überstehenden Nabenbereiche aufgesetzt. Andere Ausführungsformen weisen eine polygonartige Verformung des Dämpfungsrings für ein günstigeres radiales Einfedern auf. Bei einer der Ausführungsformen sind mehrere am Umfang seitlich neben dem Kettenkranz verteilte Hebelarme um Zapfen schwenkbar angeordnet. Die Hebelarme stützen sich auf radial in Taschen gehaltene Schraubendruckfedern ab. Die Hebel sind bis zu einer Endstellung frei einschwenkbar entgegen der Federkraft der Schraubendruckfeder, wodurch sich die gewünschte verstärkende Federwirkung beim Auflauf der Kette auf das Kettenrad ergibt.

In der nicht vorveröffentlichten deutschen Gebrauchsmusteranmeldung 29629084 ist ein Kettenrad beschrieben, bei dem auf beiden Seiten neben dem Kettenkranz ein umlaufender Dämpfungskranz mit einem Sägezahnprofil angeordnet ist. Die einzelnen Zähne des Dämpfungskranzes weisen eine flach ansteigende Flanke und eine steile abfallende Flanke auf. Beim Auflaufen der Laschenkette auf das Kettenrad kommen die Laschen mit der Kette mit den Spitzen der Zähne des Dämpfungskranzes in Berührung und üben hier eine Druckkraft aus, so daß eine Walkarbeit von dem Elastomermaterial ausgeführt werden muß. Eine solche Konstruktion bietet zwar generell eine gute Geräuschdämfung. Jedoch bedingt die auszuführende Walkarbeit eine hohe Reibung und Verformung des Dämpfungsringwerkstoffs, so daß die Lebensdauer manchen Anforderungen nicht genügt. Vielmehr ist nach einer gewissen Laufzeit mit einem Nachlassen oder Verlust der Dämpfungswirkung zu rechnen.

Es ist die Aufgabe der vorliegenden Erfindung, ein Kettenrad der eingangs genannten Art zu verbessern, so daß eine dauerhaftere Geräuschdämpfung erreichbar ist.

Diese Aufgabe wird erfindungsgemäß durch die Merkmale des Anspruchs 1 gelöst.

Die Erfindung macht sich nunmehr Federelemente zunutze, die ein freies Einfedern in einen hierfür vorgesehenen freien Federraum gestatten. Hierdurch muß nicht das Material des Federelementes verdrängt werden, so daß keine Walkarbeit durchgeführt werden muß. Vielmehr können entsprechend des Einfederweges und der Auftreffgeschwindigkeit der Lasche auf das Federelement geeignete Federelemente gewählt werden, die eine ausreichende Dauerfestigkeit aufweisen, da sie eine für das entsprechende Federelement übliche Einfederbewegung ausführen. Unter dem Begriff radiale Richtung ist nicht zwangsläufig die Haupteinfederrichtung gemeint, es kann sich auch lediglich um eine Bewegungskomponente handeln; auf die es aber letztendlich hier ankommt.

Als Federelemente werden frei einschwenkbare Federschenkel verwendet. Derartige Federschenkel sind einfach im Aufbau und vor allen Dingen kostengünstig zu realisieren. Das Material und die Federkonstante eines solchen Federschenkels stellt einen Kompromiß zwischen ausreichender Geräuschdämpfung und gewünschter Dauerfestigkeit dar. Auf jeden Fall muß das Auftreffgeräusch der Kette auf die Federschenkel wesentlich geringer sein als das Auftreffen der Gelenkhülsen bzw. die darauf angeordneten Rollen auf die Zahnflanken, wenn kein Dämpfungselement verwendet wird. Abhängig von der Federkennlinie eines solchen Federschenkels kommen die Zahnflanken relativ stoßfrei mit der Kette in Eingriff.

Um möglichst die Federschenkel gleichmäßig und einheitlich an dem Kettenrad zu gruppieren, weist der Dämpfkranz einen umlaufenden Basiskörper auf, von dem sich die Federschenkel nach außen wegerstrecken. Sämtliche Federschenkel lassen sich so in einem Arbeitsschritt an dem Kettenrad montieren. Darüber hinaus könnte eine Einstellmöglichkeit vorgesehen sein, so daß der Basiskörper um die Kettenradachse zu Einstellzwecken gedreht werden kann. Hierdurch würde sich auch das Dämpfungsverhalten ändern, weil die Kette entweder früher oder später mit den Federschenkeln in Berührung kommen würde.

Der oben beschriebene Dämpfkranz der G 296 21 084 kann eine derartige Einfederung in einen freien Federraum nicht ausführen, da überhaupt kein freier Federraum vorhanden ist. Vielmehr muß das Material selbst gewalkt werden und seitlich ausweichen in eine zwischen den Sägezähnen befindliche Lücke. Hierdurch werden zusätzlich Querbelastungen an der Oberfläche erzeugt.

Günstigerweise können die Federschenkel schräg ansteigend sich in einem spitzen Winkel zum Basiskörper erstrecken, wobei die Oberseite der Federschenkel eine Anlaufschräge für die Laschen bildet und die Unterseite des Federschenkels dem freien Federraum zugewandt ist. Der gesamte unterhalb des Federschenkels befindliche Freiraum ist demnach zur Einfederung des Federschenkels verwendbar. Der Freiraum wird in aller Regel so groß sein, daß bei einem kompletten Einfedern des Federschenkels noch keine Überlastung desselben vorliegt.

Um eine möglichst gleichmäßige Stoßdämpfung und daraus resultierende Geräuschminderung zu erzielen, kann jeder Zahnlücke des Zahnkranzes auf zumindest einer Seite ein Federelement zugeordnet sein. Das bedeutet aber auch, daß jeder potentiellen Geräuschquelle durch Auftreffen der Kette auf das Zahnrad mindestens ein eigenes Federelement zugeordnet ist.

Günstigerweise kann der in radialer Richtung von der Kettenradachse am weitesten beabstandete Bereich des Federelementes im wesentlichen mittig zur Zahnlücke angeordnet sein. Der Vorteil liegt darin, daß die Dämpfung durch das Federelement an der Stelle größter Massenkonzentration der Kette stattfindet. Die Kette greift jeweils mit einer Gelenkhülse oder einer auf dieser drehbar gelagerten Rolle in die Zahnlücke ein. Im Bereich der Gelenkhülse überlappen sich die Innen- und Außenlaschen und es sind sowohl mindestens Gelenkbolzen als auch Gelenkhülsen vorhanden. Die Dämpfung erfolgt genau im Bereich des Gelenkes. Hierzu treffen die Innen- und Außenlasche auf das Dämpfungselement auf, bevor eine Berührung der Kette in der zugeordneten Zahnlücke stattfindet. Es kann unter Umständen aber auch gewünscht sein, daß das Federelement an einer anderen Stelle angeordnet ist. Zum Beispiel könnte die Forderung bestehen, daß das Federelement nur mit einer Lasche bzw. einem Laschenpaar in Berührung kommen soll.

Eine weitere Geräuschreduzierung und Verminderung der Reibung kann dadurch erzielt werden, daß der am weitesten beabstandete Bereich des Federelementes nach außen konvex gekrümmt ist. Hierdurch ist eine abgerundete Kante geformt, die relativ sanft auf die Kette auftrifft.

Des weiteren ist es möglich, daß, gemäß einer Ausführungsform, der am weitesten beabstandete Bereich mit keinem oder lediglich geringem radialen Abstand zum Zahngrund der Zahnlücke angeordnet ist. Hierdurch wird sichergestellt, daß die Lasche immer zuerst auf das Federelement auftrifft, bevor eine Berührung innerhalb der Zahnlücke stattfindet. Dadurch, daß der Federschenkel nicht seitlich in den Bereich der Zahnlücke hineinragt, bleibt diese seitlich offen, so daß sich hier auch keine Schmutzpartikel oder ähnliches ansammeln können.

Um eine beherrschbare Biegebelastung im Bereich der Einspannung oder Befestigung des Federschenkels zu erzielen, können die Federschenkel sich in einem Winkel von ungefähr 25 bis 45°, bevorzugt 30°, von dem Basisteil wegerstrecken. Hierdurch wird auch eine sanfte Anlaufschräge erzeugt, durch die der Aufschlag der Kette auf den Federschenkel sanfter erfolgt.

Um einen möglichst großen Federweg und somit eine sanfte, jedoch ausreichende Dämpfung zu erzielen, kann der freie Federraum derart bemessen sein, daß ein freies Einfedern eines freien Endes der Federschenkel um mehr als 0,5 mm, bevorzugt mehr als 1 mm, in radialer Richtung möglich ist. Bei bisher verwendeten Lösungen konnte ein derart großer Überdeckungskontakt nicht erreicht werden, da mit der Zerstörung des Dämpfungskranzes in relativ kurzer Zeit gerechnet werden mußte.

Um Kippmomente an der Kette so gering wie möglich zu halten, können auf beiden Seiten des Zahnkranzes jeweils ein Dämpfungskranz angeordnet sein. Hierdurch werden beidseitig die Laschen der Ketten mit einer Federkraft beim Umlaufen um das Kettenrad beaufschlagt. Die von jedem Federschenkel aufzubringende Federkraft kann sich hierdurch halbieren. Ein sanfteres Abdämpfen ist daher gegeben.

Derartig gedämpfte Kettenräder werden häufig in einer Umgebung eingesetzt, bei der erhöhte Betriebstemperaturen vorliegen oder ein ständiger Kontakt mit einem Schmiermittel vorliegt. Deshalb ist es gemäß einer weiteren Ausführungsform günstig, wenn der Dämpfungskranz aus einem Basisteil aus einem zu einer zylindrischen Hülse geformten Federstahlband geformt ist, wobei die Federschenkel mittels Stanz/Biegetechnik einstückig aus dem Federstahlband herausgearbeitet sind. Es handelt sich hierbei um eine einfache Konstruktion, die leicht und kostengünstig herstellbar ist, aber dennoch den zuvor genannten Betriebsbedingungen ohne weiteres gewachsen ist. Insbesondere ist von Vorteil, daß die Federschenkel und das Basisteil einstückig miteinander verbunden sind, weshalb keine zusätzlichen Verbindungselemente benötigt werden.

Günstigerweise kann der Dämpfungskranz auf einer zylindrischen Nabe aufgebracht sein, der seitlich über den Zahnkranz übersteht. Das Basisteil wird dann auf diesen zylindrischen Absatz z. B. aufgepreßt und ggf. mittels Schweißpunkten fixiert.

Des weiteren bezieht sich die Erfindung auf einen Kettentrieb mit mindestens einem Kettenrad nach einem der vorangegangenen Ansprüche und einer das mindestens eine Kettenrad bereichsweise umschlingenden Laschenkette. Der Kettentrieb ist dadurch gekennzeichnet, daß die Geometrien der Laschenkette und des Kettenrads mit Dämpfungsringen derart aufeinander abgestimmt sind, daß die Laschenkette beim Auflaufen auf das Kettenrad zuerst mit ihren Laschen auf die Federelemente aufläuft und diese einfedert, bevor die Zähne mit einer Gelenkhülse der Laschenkette in Berührung kommen.

Im folgenden wird eine Ausführungsform der Erfindung anhand der Zeichnungen erläutert.

Es zeigen:
- Fig. 1: ein Kettenrad mit Dämpfungsringen in einer Vorderansicht;
- Fig. 2: das Kettenrad aus Fig. 1 in einer Seitenansicht und
- Fig. 3: das Kettenrad aus Fig. 1 mit herumgeführter Laschenkette.

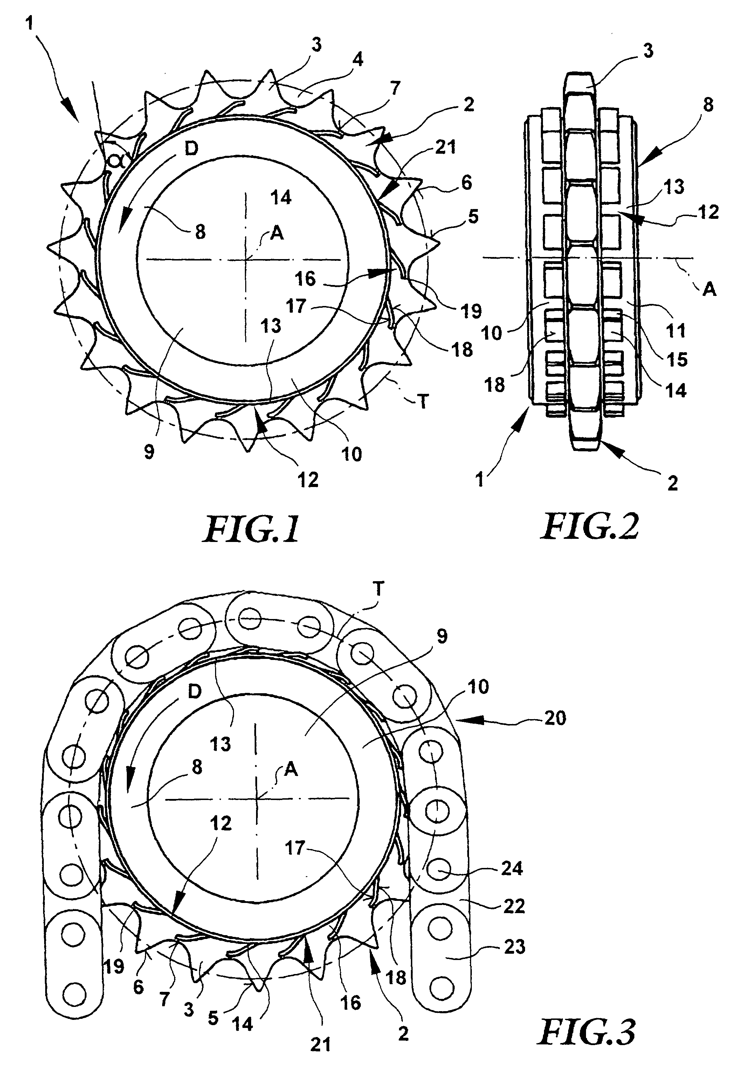

Das in Fig. 1 dargestellte Kettenrad 1 ist um die Kettenradachse A drehbar und umfaßt einen am Außenumfang umlaufenden Zahnkranz 2 mit Zähnen 3 und zwischen den Zähnen angeordneten Zahnlücken 4. Nimmt man die Drehrichtung D entgegen dem Uhrzeigersinn an, so weisen die Zähne 3 eine Einlaufflanke 5 und eine Auslaufflanke 6 auf. Der Zahnlückengrund 7 ist als konkaves Rollbett ausgeformt und verbindet die Einlaufflanke 5 mit der Auslaufflanke 6. Das Kettenrad 1 umfaßt eine zylinderhülsenförmige Nabe 8 mit einer Achsöffnung 9. Der Zahnkranz 2 ist mittig an dem Außenmantel der Nabe 8 umlaufend angeordnet, so daß auf beiden Seiten jeweils ein zylindrischer Absatz 10 bzw. 11 übersteht.

In der Fig. 1 ist auch der Teilkreis T des Zahnkreises 2 eingezeichnet. Der Außendurchmesser der zylindrischen Absätze 10 und 11 ist in etwa so gewählt, daß der Zahnlückengrund 7 im wesentlichen den gleichen radialen Abstand vom Teilkreis B sowie von der Mantelfläche der zylindrischen Absätze 10 aufweist.

Auf den zylindrischen Absätzen 10 und 11 ist jeweils ein Dämpfungsring 12 angeordnet, der aus einem zu einer Hülse geformten Federstahlband hergestellt ist. Der Dämpfungsring 12 umfaßt ein hülsenförmiges Basisteil 13 und eine Vielzahl an diesem angeordnete Federschenkel 14. Die Federschenkel 14 sind einteilig aus dem Federstahlband durch einen Stanz-/Biegevorgang herausgeformt, so daß unterhalb der Federschenkel 14 jeweils eine Öffnung 15 im Basisteil 13 angeordnet ist. Jeder Zahnlücke 4 ist ein eigener Federschenkel 14 zugeordnet, so daß deren Zahl identisch mit der Zahnlückenzahl ist. Beide Dämpfungsringe 12 sind symmetrisch zueinander ausgerichtet, so daß sich deren Federschenkel 14 auf der gleichen Höhe befinden und sich auch in die gleiche Richtung erstrecken. Würde man sich den Zahnkranz 2 wegdenken, so konnten sie deckungsgleich aufeinandergelegt werden.

In der dargestellten Ausführungsform erstrecken sich die Federschenkel 14 entgegen der Drehrichtung D in einem Winkel α vom Basisteil 13 weg, der ca. 30° beträgt. Die Dikke der Federschenkel 14 und des Basisteils 13 beträgt ca. 1 mm. Die Federschenkel 14 sind im Querschnitt rechteckförmig ausgebildet.

Unterhalb der Federschenkel 14 befindet sich jeweils ein freier Federraum 16, in den die Federschenkel 14 elastisch einfedern können. Dieser freie Federraum 16 könnte auch als von der Rückseite 17 des Federschenkels 14 übergriffene Hinterschneidung bezeichnet werden. Die schräg ansteigende Vorderseite 18 der Federschenkel 14 dient als Auflauffläche für eine Laschenkette 20. Das freie Ende des Federschenkels 14 ist am weitesten vom Basisteil 13 in radialer Richtung entfernt. Des weiteren ist dieser Bereich 19 nach außen leicht konvex gekrümmt, so daß die Laschenkette 20 nicht auf eine Kante des Federschenkels 14 aufschlägt. Das freie Ende 19 der Federschenkel 14 ist im wesentlichen mittig zur Zahnlücke 4 angeordnet und endet mit seiner Oberseite lediglich geringfügig unterhalb des Zahnlückengrunds 7. Bei asymmetrischen Zahnlückenprofilen kann eine entsprechende Anpassung bzw. Verschiebung der Federschenkel 14 erforderlich sein.

Die von jedem Federschenkel 14 aufbringbare Federkraft hängt im wesentlichen von dem verwendeten Material des Dämpfungsrings 12 und dessen Dicke, sowie der Geometrie des Federschenkels 14 ab. Je länger der Federarm des Federschenkels 14 ist, um so weicher ist die Einfederung. Die höchste Belastung des Federschenkels erfolgt an seiner Verbindungsstelle 21 zum Basisteil 13. Da aber die Biegewechselbelastung in diesem Bereich sich sehr leicht abschätzen läßt, ist auch eine Dimensionierung des Dämpfungsrings, um eine Dauerhaltbarkeit zu erzielen, sehr leicht möglich. Darüber hinaus ermöglicht die Verwendung von Stahl auch die dauerhafte Einsetzbarkeit bei erhöhten Betriebstemperaturen und unter ständiger Benetzung mit einem Schmiermittel.

Im folgenden wird unter zusätzlicher Heranziehung der Fig. 3 die Funktionsweise des obigen Ausführungsbeispiels näher erläutert.

Die um das Kettenrad 1 herumgeführte Laschenkette 20 besteht im wesentlichen aus Innenlaschen 22, Außenlaschen 23, Gelenkbolzen 24 und nicht dargestellten Gelenkhülsen. Auf den Gelenkhülsen können noch Laufrollen in bekannter Weise aufgebracht sein. Die Geometrie der Laschenkette 20 und der Federschenkel 14 des Dämpfungsrings 12 sind so aufeinander abgestimmt, daß beim Auflaufen der Laschenkette 20 auf das Kettenrad 1 die Innen- und Außenlaschen 22 und 23 auf die Vorderseite 18 bzw. den konvexen Bereich 19 auftreffen. Bekanntlich weist eine Laschenkette 20 im Bereich ihres Gelenks die größte Masse auf, so daß entsprechend hier die Dämpfung durch die Federschenkel 14 vollzogen wird. Wichtig ist hierbei, daß die Laschenkette 20 zuerst auf einen Federschenkel 14 auftrifft, bevor irgendein anderes Bauteil im Bereich des zugeordneten Gelenks mit dem Zahnkranz 2 in Berührung kommt. Dadurch, daß die Federschenkel 14 aufgrund ihrer schrägen Anordnung und ihrer relativ geringen Dicke sehr weich einfedern, sorgt der Aufschlagimpuls der Laschen 22, 23 für eine unmittelbare und weiche Einfederung und somit für die gewünschte Geräuschreduzierung. Der Federweg in radialer Richtung, bezüglich der Achse A gemessen, beträgt dabei mindestens 1 mm, und der Federschenkel 14 bewegt sich dabei in den freien Federraum 16 hinein. Dadurch, daß eine übliche Federbewegung ohne irgendwelche Walkarbeit bzw. ungünstigen Verformungen der Federelemente stattfinden muß, ist ein derartiger Dämpfungsring 12 für einen Einsatz im Dauerbetrieb sehr gut geeignet. Aufgrund der konvexen Form des Bereichs 19 sind auch die Reibungsverhältnisse zwischen Innenlaschen 22 und Außenlaschen 23 und den Federschenkel 14 relativ günstig.

Wie insbesondere im oberen Bereich der Fig. 3 erkannt wird, drückt die Innenlasche 22 in einer anderen Richtung gegen den Federschenkel 14 als die Außenlasche 23. Dadurch, daß der Bereich 19 konvex gekrümmt ist, paßt sich der Federschenkel 14 genau in diesen Knick zwischen Innenlasche 22 und Außenlasche 23 hinein und es kommt zu einer günstigen Zwei-Punkt-Anlage, der aufgrund des Federschenkels 14 in diesem Bereich nicht zu einer Quetschung des Materials führt.

Der Federschenkel 14 federt beim Auflaufen der Laschenkette 20 soweit ein, bis die Gelenkhülse oder die darauf angeordnete Rolle mit der Einlaufflanke 5 in Berührung kommt. Da der Federschenkel 14 zu diesem Zeitpunkt bereits einen vorbestimmten Federweg zurückgelegt hat, erfolgt auch die Anlage an die Einlaufflanke 5 mit entsprechend abgeminderter Kraft. Diese Abdämfpung erfolgt auf beiden Seiten des Zahnkranzes 2 gleichzeitig, so daß keine Kippkräfte an der Laschenkette 20 auftreten. Des weiteren ist es günstig, daß die Federschenkel allmählich einfedern und nicht schlagartig die gesamte Kraft aufgebracht wird. Hierdurch treten dynamische Kräfte in relativ beherrschbaren Grenzen auf.

Beim Auslaufen der Kette 20 erfolgt in umgekehrter Form ein sanftes Ausfedem der Federschenkel 14. Hierdurch werden auch Vibrationen der Kette durch den Auslaufvorgang gedämpft.

Es sei angemerkt, daß die Geometrie der Federschenkel sehr stark von der Geometrie der zu verwendenden Laschenkette 20 abhängt. So spielt z. B. der Abstand der Außenkante der Innen- und Außenlaschen 22 und 23 zu der Außenfläche der Gelenkhülse bzw. darauf angeordneten Laufrollen, eine entscheidende Rolle, wo das freie Ende 19 und in welchem Abstand zur Zahnlücke 4 dieses angeordnet werden muß. Der Winkel α nimmt auch Einfluß auf die im Bereich 21 auftretenden Kräfte sowie die gewünschte Federrate, da sich durch dessen Veränderung auch die Länge der Federschenkel 14 variieren läßt. Üblicherweise wird ein aus einem Federstahlband hergestellter Dämpfungsring 12 noch zusätzlich mit den Absätzen 10 und 11 verschweißt, so daß seine Lage dauerhaft fixiert ist. Es wäre aber auch eine Variante denkbar, bei der durch ein Verdrehen des Dämpfungsrings 12 eine Einstellung der Dämpfwirkung erfolgen könnte.

Ein Hauptvorteil der oben beschriebenen Ausführungsform besteht darin, daß die Federschenkel frei in einen Federraum 16 einfedem können. Darüber hinaus ist diese Ausführungsform unter der Verwendung eines Federstahlbandes relativ stabil und verschleißarm. Beim Stillstand des Kettentriebes erfolgt darüber hinaus im Bereich der eingefederten Federschenkel 14 kein Fließen des Materials, wie es zum Teil bei Kunststoff zu beobachten ist. Es ist aber dennoch denkbar, daß ein geeigneter Kunststoff ebenfalls zur Herstellung des Dämpfungsrings 12 verwendbar ist.

## Patentansprüche

1. Kettenrad (1) mit einem zumindest auf einer Seite neben dem Zahnkranz (2) angeordneten, elastisch verformbaren Dämpfungskranz (12) für einen Überdekkungskontakt mit Laschen (22,23) einer Kette (20), wobei der Dämpfungskranz (12) Federelemente (14) aufweist, die jeweils zumindest in radialer Richtung zur Kettenradachse (A) einen freien Federraum (16) aufweisen, in den zumindest Abschnitte der Federelemente (14) frei einfederbar sind, und die Federelemente (14) als frei einschwenkbare Federschenkel ausgestaltet sind, **dadurch gekennzeichnet, daß** der Dämpfungskranz (12) einen umlaufenden Basiskörper (13) aufweist, von dem sich die Federschenkel (14) nach außen wegerstrecken.

2. Kettenrad nach Anspruch 1, **dadurch gekennzeichnet, daß** die Federschenkel schräg ansteigend sich in einem spitzen Winkel (α) zum Basiskörper (13) erstrecken, wobei die Oberseite (18) der Federschenkel (14) eine Anlaufschräge für die Laschen (22,23) bildet und die Unterseite (17) der Federschenkel (14) dem freien Federraum (16) zugewandt ist.

3. Kettenrad nach Anspruch 1 oder 2, **dadurch gekennzeichnet, daß** jeder Zahnlücke (4) des Zahnkranzes (2) auf mindestens einer Seite ein Federelement (14) zugeordnet ist.

4. Kettenrad nach einem der vorangegangenen Ansprüche, **dadurch gekennzeichnet, daß** der in radialer Richtung von der Kettenradachse (A) am weitesten beabstandete Bereich (19) des Federelements (14) im wesentlichen mittig zur Zahnlücke (4) angeordnet ist.

5. Kettenrad nach Anspruch 4, **dadurch gekennzeichnet, daß** der am weitesten beabstandete Bereich (19) des Federelements (14) nach außen konvex gekrümmt ist.

6. Kettenrad nach Anspruch 4 oder 5, **dadurch gekennzeichnet, daß** der am weitesten beabstandete Bereich (19) mit keinem oder lediglich geringen radialem Abstand zum Zahngrund (7) der Zahnlücke (4) angeordnet ist.

7. Kettenrad nach einem der vorangegangenen Ansprüche, **dadurch gekennzeichnet, daß** die Federschenkel (14) sich in einem Winkel (α) von etwa 25 bis 45°, bevorzugt 30°, von dem Basisteil (13) wegerstrecken.

8. Kettenrad nach einem der vorangegangenen Ansprüche, **dadurch gekennzeichnet, daß** der freie Federraum (16) derart bemessen ist, daß ein freies Einfedern eines freien Endes des Federschenkels (14) um mehr als 0,5 mm, bevorzugt mehr als 1 mm, in radialer Richtung möglich ist.

9. Kettenrad nach einem der vorangegangenen Ansprüche, **dadurch gekennzeichnet, daß** auf beiden Seiten des Zahnkranzes (2) ein Dämpfungskranz (12) angeordnet ist.

10. Kettenrad nach einem der vorangegangenen Ansprüche, **dadurch gekennzeichnet, daß** der Dämpfungskranz (12) aus einem Basisteil (13) aus einem zu einer zylindrischen Hülse geformten Federstahlband geformt ist, wobei die Federschenkel (14) mittels Stanz-/Biegetechnik einstückig aus dem Federstahlband herausgearbeitet sind.

11. Kettenrad nach einem der vorangegangenen Ansprüche, **dadurch gekennzeichnet, daß** der Dämpfungskranz (12) auf einer zylindrischen Nabe (8) aufgebracht ist, die seitlich über den Zahnkranz (2) übersteht.

## Claims

1. Chain wheel (1) having an elastically deformable damping ring arranged at least on one side beside the gear ring (2) for covering contact with links (22, 23) of a chain (20), wherein the damping ring (12) possesses spring elements (14) which each have at least in the radial direction with respect to the chain wheel axis (A) a free springing space (16) into which at least sections of the spring elements (14) are freely deflectable and the spring elements (14) are designed as freely pivotable spring legs, **characterised in that** the damping ring (12) possesses an all-round base member (13) from which the spring legs (14) extend away outwards.

2. Chain wheel according to Claim 1, **characterised in that** the spring legs extend obliquely, rising at an acute angle (a) relative to the base member (13), wherein the upper side of the spring legs (14) forms a run-up slope for the links (22, 23) and the underside (17) of the spring legs (14) is turned towards the free springing space (16).

3. Chain wheel according to Claim 1 or 2, **characterised in that** to each tooth gap (4) in the gear ring (2) a spring element (14) is assigned on at least one side.

4. Chain wheel according to one of the preceding claims, **characterised in that** the region (19) of the spring element (14) furthest away from the chain wheel axis (A) in the radial direction is arranged substantially centrally with respect to the tooth gap (4).

5. Chain wheel according to Claim 4, **characterised in that** the furthest away region (19) of the spring element (14) is curved outwardly in convex manner.

6. Chain wheel according to Claim 4 or 5, **characterised in that** the furthest away region (19) is arranged with no or only little radial spacing relative to the tooth base (7) of the tooth gap (4).

7. Chain wheel according to one of the preceding claims, **characterised in that** the spring legs (14) extend away from the base part (13) at an angle (a) of approximately 25 to 45°, preferably 30°.

8. Chain wheel according to one of the preceding claims, **characterised in that** the free springing space (16) is of such a size that a free deflection of a free end of the spring leg (14) by more than 0.5 mm, preferably more than 1 mm, in the radial direction is possible.

9. Chain wheel according to one of the preceding claims, **characterised in that** a damping ring (12) is arranged on both sides of the gear ring (2).

10. Chain wheel according to one of the preceding claims, **characterised in that** the damping ring (12) is formed from a base part (13) made from a spring steel band shaped to form a cylindrical collar, wherein the spring legs (14) are carved out in one piece from the spring steel band by means of punching/bending technology.

11. Chain wheel according to one of the preceding claims, **characterised in that** the damping ring (12) is put onto a cylindrical hub (8) which juts out laterally over the gear ring (2).

## Revendications

1. Pignon de chaîne (1) comportant au moins une couronne d'amortissement (12) déformable élastiquement, disposée sur un côté près de la couronne dentée (2) pour un contact de recouvrement par les maillons (22, 23) d'une chaîne (20), dans lequel la couronne d'amortissement (12) comprend des éléments élastiques (14) qui présentent chacun au moins dans la direction radiale par rapport à l'axe (A) du pignon de chaîne un espace de ressort libre (16), dans lequel au moins des segments des éléments élastiques (14) peuvent faire ressort librement, et les éléments élastiques (14) sont réalisés sous la forme d'étriers élastiques pouvant se placer librement, **caractérisé en ce que** la couronne d'amortissement (12) comporte un corps de base périphérique (13) à partir duquel les étriers élastiques (14) s'étendent vers l'extérieur.

2. Pignon de chaîne selon la revendication 1 **caractérisé en ce que** les étriers élastiques s'étendent à partir du corps de base (13) avec une inclinaison en formant un angle aigu (α), **en ce que** le côté supérieur (18) des étriers élastiques (14) forme une inclinaison d'entrée pour les maillons (22, 23) et le côté inférieur des étriers élastiques (14) est tourné vers l'espace de ressort libre (16).

3. Pignon de chaîne selon la revendication 1 ou 2 **caractérisé en ce qu'**à chaque évidement de dent (4) de la couronne dentée (2) est adjoint sur au moins un côté un élément élastique (14).

4. Pignon de chaîne selon l'une quelconque des revendications précédentes **caractérisé en ce que** la zone (19) de l'élément élastique (14) la plus largement éloignée de l'axe (A) de la chaîne dans la direction radiale est agencée sensiblement au milieu de l'évidement (4) de dent.

5. Pignon de chaîne selon la revendication 4 **caractérisé en ce que** la zone (19) de l'élément élastique (14) la plus largement éloignée est cintrée convexe vers l'extérieur.

6. Pignon de chaîne selon la revendication 4 ou 5 **caractérisé en ce que** la zone (19) la plus largement éloignée est agencée sans ou avec un faible écartement radial par rapport à la base de dent (7) de l'évidement (4) de dent.

7. Pignon de chaîne selon l'une quelconque des revendications précédentes **caractérisé en ce que** les étriers élastiques (14) s'étendent depuis la partie de base (13) suivant un angle (α) d'environ 25 à 45°, de préférence 30°.

8. Pignon de chaîne selon l'une quelconque des revendications précédentes **caractérisé en ce que** l'espace de ressort libre (16) est mesuré de façon qu'un libre débattement élastique d'une extrémité libre de l'étrier élastique (14) de plus de 0,5 mm, de préférence de plus de 1 mm, soit possible en direction radiale.

9. Pignon de chaîne selon l'une quelconque des revendications précédentes **caractérisé en ce qu'**une couronne d'amortissement (12) est disposée sur les deux côtés de la couronne dentée (2).

10. Pignon de chaîne selon l'une quelconque des revendications précédentes **caractérisé en ce que** la couronne d'amortissement (12) est formée par une partie de base (13) à partir d'un feuillard en acier à ressort conformé en une douille cylindrique, et les étriers élastiques (14) sont fabriqués à partir du feuillard en acier à ressort au moyen d'une technique estampage/pliage.

11. Pignon de chaîne selon l'une des revendications précédentes **caractérisé en ce que** la couronne d'amortissement (12) est rapportée sur un moyeu cylindrique (8) qui fait saillie latéralement au-dessus de la couronne dentée (2).
